# EUROPEAN PATENT APPLICATION

(11) **EP 3 489 913 A1**
(43) Date of publication of application: **29.05.2019**
(21) Application number: 18207093.8
(22) Date of filing: 19.11.2018
(51) Int. Cl.: G07C 5/08, G07C 5/00

(54) **DIAGNOSTIC APPARATUS, NON-TRANSITORY COMPUTER-READABLE STORAGE MEDIUM STORING PROGRAM, AND CONNECTION SETUP METHOD**

(30) Priority: 28.11.2017 JP 2017228261
(71) Applicant: TOYOTA JIDOSHA KABUSHIKI KAISHA, Toyota-shi, Aichi-ken, 471-8571 (JP)
(72) Inventor: NISHITANI, Shogo, TOYOTA-SHI, AICHI-KEN, 471-8571 (JP); UCHIDA, Takehiro, TOYOTA-SHI, AICHI-KEN, 471-8571 (JP)
(74) Representative: Cabinet Beau de Loménie

(57) **Abstract**

A diagnostic apparatus (10, 10A, 10B, 10C) is configured to relay diagnostic communication between a maintenance terminal (30) and a vehicle (20, 20A, 20B, 20C). The maintenance terminal (30) is used to perform maintenance-management of the vehicle (20, 20A, 20B, 20C). The diagnostic apparatus (10, 10A, 10B, 10C) includes a control processor (12) configured to: read out, from the vehicle (20, 20A, 20B, 20C), identification information unique to the vehicle (20, 20A, 20B, 20C) connected to the diagnostic apparatus (10, 10A, 10B, 10C), before wireless connection between the maintenance terminal (30) and the diagnostic apparatus (10, 10A, 10B, 10C) is set up; and transmit the identification information unique to the vehicle (20, 20A, 20B, 20C) to the maintenance terminal (30). The identification information serves as information for identifying the diagnostic apparatus (10, 10A, 10B, 10C) to which the maintenance terminal (30) is wirelessly connected when the wireless connection between the maintenance terminal (30) and the diagnostic apparatus (10, 10A, 10B, 10C) is set up.

## Description

### BACKGROUND OF THE INVENTION

### 1. Field of the Invention

The invention relates to a diagnostic apparatus, a non-transitory computer-readable storage medium storing a program, and a connection setup method.

### 2. Description of Related Art

For example, a diagnostic apparatus called a vehicle interface module (VIM) has been used as a tool for collecting information regarding a failure diagnosis performed on an in-vehicle electronic control unit or an in-vehicle component that is under the control of the in-vehicle electronic control unit, or rewriting a program stored in a flash memory mounted in the in-vehicle electronic control unit. This kind of diagnostic apparatus is described in Japanese Patent No. 5419649 (JP 5419649 B). The diagnostic apparatus described in JP 5419649 B is wirelessly connected to a maintenance terminal via a plurality of access points, and is also connected to a vehicle by wire.

### SUMMARY OF THE INVENTION

A maintenance worker who operates a maintenance terminal selects a diagnostic apparatus to be connected to the maintenance terminal based on information (e.g., a serial number) unique to each diagnostic apparatus, and then sets up wireless connection between the selected diagnostic apparatus and the maintenance terminal. Therefore, at the stage of wireless connection setup, the type of a vehicle connected to the diagnostic apparatus that is subjected to the wireless connection setup is unknown. Thus, a potential error may occur, for example, a program stored in a flash memory mounted in an electronic control unit of the vehicle connected to the diagnostic apparatus may be mistakenly rewritten into a program for another type of vehicle. The diagnostic apparatus may be used for maintenance-management of many and unspecified vehicles. For this reason, it is desirable to prevent the occurrence of an error described above.

The invention provides a diagnostic apparatus, a non-transitory computer-readable storage medium storing a program, and a connection setup method, all of which make it possible to set up wireless connection after accurately identifying a vehicle connected to a diagnostic apparatus.

A first aspect of the invention relates to a diagnostic apparatus configured to relay diagnostic communication between a maintenance terminal and a vehicle. The maintenance terminal is used to perform maintenance-management of the vehicle. The diagnostic apparatus includes a control processor configured to: read out, from the vehicle, identification information unique to the vehicle connected to the diagnostic apparatus, before wireless connection between the maintenance terminal and the diagnostic apparatus is set up; and transmit the identification information unique to the vehicle to the maintenance terminal. The identification information serves as information for identifying the diagnostic apparatus to which the maintenance terminal is wirelessly connected when the wireless connection between the maintenance terminal and the diagnostic apparatus is set up.

A second aspect of the invention relates to a non-transitory computer-readable storage medium storing a program. The program is installed in a diagnostic apparatus configured to relay diagnostic communication between a maintenance terminal and a vehicle. The maintenance terminal is used to perform maintenance-management of the vehicle. The program enables the diagnostic apparatus to execute steps i) and ii). The steps i) and ii) are i) a step of reading out, from the vehicle, identification information unique to the vehicle connected to the diagnostic apparatus, before wireless connection between the maintenance terminal and the diagnostic apparatus is set up, and ii) a step of transmitting the identification information unique to the vehicle to the maintenance terminal, the identification information serving as information for identifying the diagnostic apparatus to which the maintenance terminal is wirelessly connected when the wireless connection between the maintenance terminal and the diagnostic apparatus is set up.

A third aspect of the invention relates to a connection setup method including: steps i) and ii) executed by a diagnostic apparatus configured to relay diagnostic communication between a maintenance terminal and a vehicle. The maintenance terminal is used to perform maintenance-management of the vehicle. The steps i) and ii) are i) a step of reading out, from the vehicle, identification information unique to the vehicle connected to the diagnostic apparatus, before wireless connection between the maintenance terminal and the diagnostic apparatus is set up, and ii) a step of transmitting the identification information unique to the vehicle to the maintenance terminal, the identification information serving as information for identifying the diagnostic apparatus to which the maintenance terminal is wirelessly connected when the wireless connection between the maintenance terminal and the diagnostic apparatus is set up.

The identification information unique to the vehicle is used as the information for identifying the diagnostic apparatus to which the maintenance terminal is wirelessly connected when the wireless connection between the maintenance terminal and the diagnostic apparatus is set up. Thus, it is possible to set up the wireless connection after identifying the vehicle connected to the diagnostic apparatus.

### BRIEF DESCRIPTION OF THE DRAWINGS

Features, advantages, and technical and industrial significance of example embodiments of the invention will be described below with reference to the accompanying drawings, in which like reference signs denote like elements, and wherein:
FIG. 1 is a hardware configuration diagram of a diagnostic apparatus according to an embodiment of the invention;
FIG. 2 is a diagram illustrating an example of a mode of connection between a plurality of diagnostic apparatuses and a maintenance terminal according to the embodiment of the invention;
FIG. 3 is a diagram illustrating a flow of a connection setup method according to the embodiment of the invention; and
FIG. 4 is a diagram illustrating a modified example of the mode of connection between the plurality of diagnostic apparatuses and the maintenance terminal according to the embodiment of the invention.

### DETAILED DESCRIPTION OF EMBODIMENTS

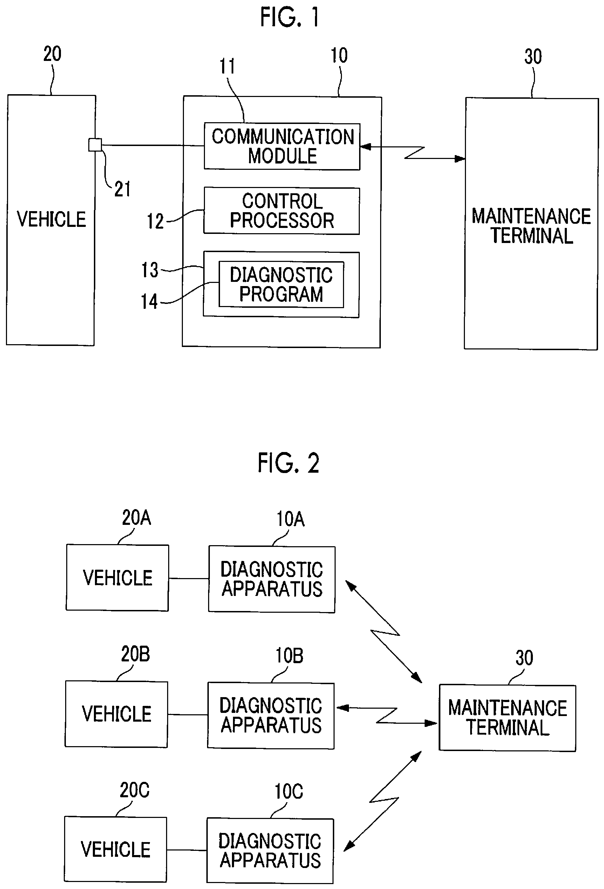

Hereinafter, example embodiments of the invention will be described with reference to the accompanying drawings. Note that the same elements will be denoted by the same reference signs, and detailed description thereof will not be repeated. FIG. 1 is a hardware configuration diagram of a diagnostic apparatus 10 according to an embodiment of the invention. The diagnostic apparatus 10 is a failure diagnostic tool configured to relay diagnostic communication between a vehicle 20 and a maintenance terminal 30. The maintenance terminal 30 is a computer (e.g., a personal computer or a host computer) on which a software program is installed. The software program allows the maintenance terminal 30 to perform maintenance-management of the vehicle 20 via the diagnostic apparatus 10. The diagnostic communication means communication for maintenance-management, which is performed between an electronic control unit in the vehicle 20 and the maintenance terminal 30. The diagnostic communication includes, for example, communication through which a request for transmission of self-diagnostic information is sent from the maintenance terminal 30 to the electronic control unit in the vehicle 20, and communication through which the self-diagnostic information is transmitted from the electronic control unit in the vehicle 20 to the maintenance terminal 30 in response to the request. The self-diagnostic information means information regarding a failure diagnosis performed on the electronic control unit in the vehicle 20 or components (e.g., a sensor and an actuator) that are under the control of the electronic control unit. The diagnostic communication includes, for example, communication for rewriting a program stored in a flash memory mounted in the electronic control unit in the vehicle 20.

The diagnostic apparatus 10 includes a communication module 11, a control processor 12, and a storage device 13. The communication module 11 is connected, by wire, to an in-vehicle communication network via a data link connector 21 of the vehicle 20. The in-vehicle communication network connects a plurality of electronic control units in the vehicle 20 to each other. Further, the communication module 11 is wirelessly connected to the maintenance terminal 30. As the in-vehicle communication network, for example, a controller area network (CAN) is used. The data link connector 21 conforms to standards, such as International Organization for Standardization (ISO) 15031-3, or Society of Automotive Engineers, Inc. (SAE) J1962. As the mode of wireless connection between the communication module 11 and the maintenance terminal 30, for example, short-range wireless communication (e.g., WiFi (registered trademark) or Bluetooth (registered trademark)) is used.

The control processor 12 interprets and executes a diagnostic program 14 stored in the storage device 13, thereby controlling operations of the diagnostic apparatus 10 (e.g., setup of wireless connection between the diagnostic apparatus 10 and the maintenance terminal 30, and relay of diagnostic communication between the vehicle 20 and the maintenance terminal 30). The storage device 13 is a recording medium, such as a semiconductor memory or a disk medium.

FIG. 2 is a diagram illustrating an example of a mode of connection between a plurality of diagnostic apparatuses 10A, 10B, 10C and the maintenance terminal 30 according to the present embodiment of the invention. In order to distinguish the diagnostic apparatuses 10A, 10B, 10C from each other, they are denoted by reference signs that are different from each other. However, the hardware configuration of each of the diagnostic apparatuses 10A, 10B, 10C is the same as the hardware configuration of the diagnostic apparatus 10 illustrated in FIG. 1. When it is not necessary to distinguish the diagnostic apparatuses 10A, 10B, 10C from each other, each of them will be referred to as the diagnostic apparatus 10. The maintenance terminal 30 can perform maintenance-management of a vehicle 20A via the diagnostic apparatus 10A. The maintenance terminal 30 can perform maintenance-management of a vehicle 20B via the diagnostic apparatus 10B. The maintenance terminal 30 can perform maintenance-management of a vehicle 20C via the diagnostic apparatus 10C. For convenience sake, description has been provided on the assumption that the number of the diagnostic apparatuses 10 to be connected to the maintenance terminal 30 is three. However, the number of diagnostic apparatuses 10 to be connected to the maintenance terminal 30 may be four or more. When it is not necessary to distinguish the vehicles 20A, 20B, 20C from each other, each of them will be referred to as the vehicle 20.

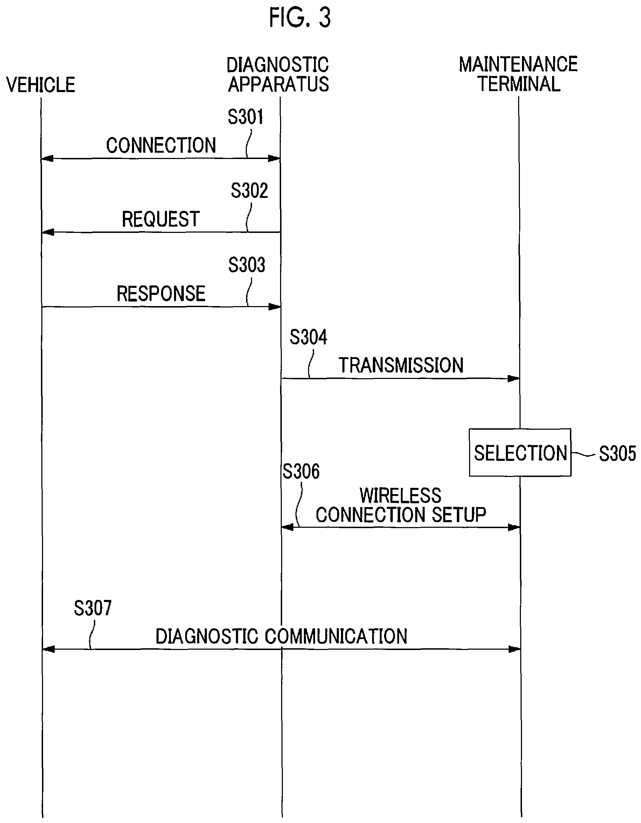

FIG. 3 is a diagram illustrating a flow of a connection setup method according to the present embodiment of the invention. In step S301, the diagnostic apparatus 10 is connected to the data link connector 21 of the vehicle 20. In step S302, the diagnostic apparatus 10 sends, to the vehicle 20, a request for readout of identification information unique to the vehicle 20. The identification information unique to the vehicle 20 may be, for example, a unique code containing a serial number, which is used to identify the vehicle 20 individually. Such a code is called a vehicle identification number (VIN), which is defined by ISO 3833. Note that the identification information unique to the vehicle 20 is not limited to VIN, and any identification information that can be read out from the vehicle 20 may be used as the identification information unique to the vehicle 20. The request for readout of the identification information unique to the vehicle 20 is sent to the vehicle 20 before wireless connection between the maintenance terminal 30 and the diagnostic apparatus 10 is set up (step S306). In step S303, the diagnostic apparatus 10 receives, from the vehicle 20, a response to the request for readout of the identification information unique to the vehicle 20. The response contains the identification information unique to the vehicle 20. In step S304, the diagnostic apparatus 10 transmits, to the maintenance terminal 30, the identification information unique to the vehicle 20 instead of identification information (e.g., a serial number) unique to the diagnostic apparatus 10. The identification information unique to the vehicle 20 is the information that is used to identify the diagnostic apparatus 10 to which the maintenance terminal 30 is wirelessly connected when the wireless connection between the maintenance terminal 30 and the diagnostic apparatus 10 is set up (step S306). In step S305, a maintenance worker who operates the maintenance terminal 30 identifies and selects the diagnostic apparatus 10 to which the maintenance terminal 30 is to be wirelessly connected, based on the identification information unique to the vehicle 20. For example, in the example in FIG. 2, identification information unique to the vehicle 20A is provided to the maintenance terminal 30 as the information for identifying the diagnostic apparatus 10A, identification information unique to the vehicle 20B is provided to the maintenance terminal 30 as the information for identifying the diagnostic apparatus 10B, and identification information unique to the vehicle 20C is provided to the maintenance terminal 30 as the information for identifying the diagnostic apparatus 10C. For example, when maintenance-management of the vehicle 20B, among the vehicles 20A, 20B, 20C, is to be performed, the maintenance worker selects the diagnostic apparatus 10B associated with the identification information unique to the vehicle 20B, as the diagnostic apparatus 10 to which the maintenance terminal 30 is to be wirelessly connected. In step S306, the maintenance terminal 30 sets up the wireless connection between the selected diagnostic apparatus 10 and the maintenance terminal 30. When the wireless connection is set up, registration (e.g., pairing) of identification information of the communication target is performed. In step S307, the diagnostic apparatus 10 relays diagnostic communication between the vehicle 20 and the maintenance terminal 30.

According to the connection setup method in the present embodiment, instead of identification information unique to the diagnostic apparatus 10, the identification information unique to the vehicle 20 is used as the information for identifying the diagnostic apparatus 10 to which the maintenance terminal 30 is wirelessly connected when the wireless connection between the maintenance terminal 30 and the diagnostic apparatus 10 is set up. Thus, it is possible to set up the wireless connection after accurately identifying the vehicle 20 connected to the diagnostic apparatus 10. As a result, from among the plurality of diagnostic apparatuses 10, the diagnostic apparatus 10 connected to the vehicle 20 of a particular vehicle type is selected as the diagnostic apparatus 10 to which the maintenance terminal 30 is to be wirelessly connected, and wireless connection between the maintenance terminal 30 and the selected diagnostic apparatus 10 is set up, so that maintenance-management of the vehicle 20 of the particular vehicle type is performed.

With the cooperation between the hardware resources of the diagnostic apparatus 10 and the diagnostic program 14, the functions for executing the processes in steps S302, S303, S304, S306, and S307 are implemented. The functions similar to these functions may be implemented by dedicated hardware resources (e.g., application specific integrated circuits (ASIC)) or firmware.

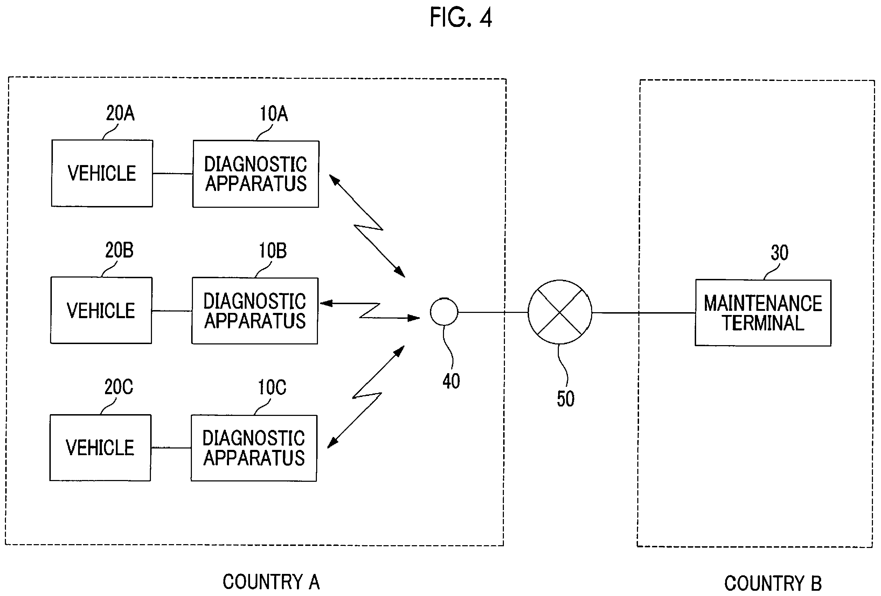

FIG. 4 is a diagram illustrating a modified example of a mode of connection between the plurality of diagnostic apparatuses 10A, 10B, 10C and the maintenance terminal 30 according to the foregoing embodiment of the invention. The vehicles 20A, 20B, 20C and the diagnostic apparatuses 10A, 10B, 10C are disposed in a country A, and the maintenance terminal 30 is disposed in a country B. The diagnostic apparatuses 10A, 10B, 10C are connected to the maintenance terminal 30 via a wireless access point 40 in the country A and a network 50 (e.g., an internet-protocol-based network, such as the internet or an intranet). With such a mode of connection, from among the plurality of diagnostic apparatuses 10 disposed in the country A, the diagnostic apparatus 10 connected to the vehicle 20 of a particular vehicle type can be selected, by the maintenance terminal 30 disposed in the country B, as the diagnostic apparatus 10 to which the maintenance terminal 30 is to be wirelessly connected, and wireless connection between the maintenance terminal 30 and the selected diagnostic apparatus 10 is set up, so that maintenance-management of the vehicle 20 of the particular vehicle type can be performed.

The foregoing embodiments have been described in order to facilitate understanding of the invention. It is to be understood that the invention is not limited to the foregoing embodiments, and various modifications and changes may be made to the foregoing embodiments within the technical scope of the appended claims. In addition, the invention is intended to cover various equivalent arrangements.

## Claims

1. A diagnostic apparatus (10, 10A, 10B, 10C) configured to relay diagnostic communication between a maintenance terminal (30) and a vehicle (20, 20A, 20B, 20C), the maintenance terminal (30) being used to perform maintenance-management of the vehicle (20, 20A, 20B, 20C), the diagnostic apparatus (10, 10A, 10B, 10C) comprising a control processor (12) configured to:
read out, from the vehicle (20, 20A, 20B, 20C), identification information unique to the vehicle (20, 20A, 20B, 20C) connected to the diagnostic apparatus (10, 10A, 10B, 10C), before wireless connection between the maintenance terminal (30) and the diagnostic apparatus (10, 10A, 10B, 10C) is set up; and
transmit the identification information unique to the vehicle (20, 20A, 20B, 20C) to the maintenance terminal (30), the identification information serving as information for identifying the diagnostic apparatus (10, 10A, 10B, 10C) to which the maintenance terminal (30) is wirelessly connected when the wireless connection between the maintenance terminal (30) and the diagnostic apparatus is set up (10, 10A, 10B, 10C).

2. A non-transitory computer-readable storage medium storing a program (14), wherein:
the program (14) is installed in a diagnostic apparatus (10, 10A, 10B, 10C) configured to relay diagnostic communication between a maintenance terminal (30) and a vehicle (20, 20A, 20B, 20C), the maintenance terminal (30) being used to perform maintenance-management of the vehicle (20, 20A, 20B, 20C); and
the program (14) enables the diagnostic apparatus (10, 10A, 10B, 10C) to execute steps i) and ii)
i) reading out, from the vehicle (20, 20A, 20B, 20C), identification information unique to the vehicle (20, 20A, 20B, 20C) connected to the diagnostic apparatus (10, 10A, 10B, 10C), before wireless connection between the maintenance terminal (30) and the diagnostic apparatus (10, 10A, 10B, 10C) is set up, and
ii) transmitting the identification information unique to the vehicle (20, 20A, 20B, 20C) to the maintenance terminal (30), the identification information serving as information for identifying the diagnostic apparatus (10, 10A, 10B, 10C) to which the maintenance terminal (30) is wirelessly connected when the wireless connection between the maintenance terminal (30) and the diagnostic apparatus (10, 10A, 10B, 10C) is set up.

3. A connection setup method comprising:
steps i) and ii) executed by a diagnostic apparatus (10, 10A, 10B, 10C) configured to relay diagnostic communication between a maintenance terminal (30) and a vehicle (20, 20A, 20B, 20C), the maintenance terminal (30) being used to perform maintenance-management of the vehicle (20, 20A, 20B, 20C),
i) reading out, from the vehicle (20, 20A, 20B, 20C), identification information unique to the vehicle (20, 20A, 20B, 20C) connected to the diagnostic apparatus (10, 10A, 10B, 10C), before wireless connection between the maintenance terminal (30) and the diagnostic apparatus (10, 10A, 10B, 10C) is set up, and
ii) transmitting the identification information unique to the vehicle (20, 20A, 20B, 20C) to the maintenance terminal (30), the identification information serving as information for identifying the diagnostic apparatus (10, 10A, 10B, 10C) to which the maintenance terminal (30) is wirelessly connected when the wireless connection between the maintenance terminal (30) and the diagnostic apparatus (10, 10A, 10B, 10C) is set up.
